# EUROPÄISCHE PATENTANMELDUNG

(11) **EP 1 199 093 A1**
(43) Veröffentlichungstag der Anmeldung: **24.04.2002**
(21) Anmeldenummer: 00122724.8
(22) Anmeldetag: 18.10.2000
(51) Int. Cl.: B01D 27/10, B01D 27/14, B01D 29/07

(54) **Filterelement**

(71) Anmelder: ARGO GmbH für Fluidtechnik, 76703 Kraichtal-Menzingen (DE)
(72) Erfinder: Mössinger, Klaus, 74182 Obersulm-Willsbach (DE); Deschner, Klaus, 76684 Östringen (DE); Breusch, Norbert, 74889 Sinsheim (DE)
(74) Vertreter: Hoeger, Stellrecht & Partner

(57) **Zusammenfassung**

Die Erfindung betrifft ein Filterelement (10) für eine Filtervorrichtung (10) zum Filtrieren einer Flüssigkeit, insbesondere eines Hydrauliköls, mit einem ein Filtermaterial (35) aufweisenden, hohlzylinderförmigen Filtermantel (29), einer den Filtermantel (29) stirnseitig abschließenden Endscheibe (30) und einem bei zugesetztem Filtermaterial (35) eine Durchgangsöffnung (40) der Endscheibe (30) freigebenden Bypassventil (42), das einen einen Ventilsitz (45) ausbildenden Ventilkörper (44) und einen mittels einer Schließfeder (48) in Richtung auf den Ventilsitz (45) federbelasteten Ventilteller (46) umfaßt. Unter Aufrechterhaltung einer hohen Filterqualität konstruktiv einfacher und kostengünstiger montierbar auszugestalten, wird erfindungsgemäß vorgeschlagen, daß das Filterelement (28) ein die Schließfeder (48) abstützendes Siebelement (50) aufweist. Die Erfindung betrifft außerdem eine Filtervorrichtung mit einem derartigen Filterelement (28) und mit einem mittels eines Deckels (20) verschließbaren Filtergehäuse (12), wobei das Filterelement (28) über eine Rastverbindung mit dem Deckel (20) lösbar verbindbar ist.

## Beschreibung

Die Erfindung betrifft ein Filterelement für eine Filtervorrichtung zum Filtrieren einer Flüssigkeit, insbesondere eines Hydrauliköls, mit einem ein Filtermaterial aufweisenden, hohlzylinderförmigen Filtermantel, einer den Filtermantel stirnseitig abschließenden Endscheibe und einem bei zugesetztem Filtermaterial eine Durchgangsöffnung der Endscheibe freigebenden Bypassventil, das einen einen Ventilsitz ausbildenden Ventilkörper und einen mittels einer Schließfeder in Richtung auf den Ventilsitz federbelasteten Ventilteller umfaßt.

Derartige Filterelemente kommen beispielsweise zur Filtrierung von Mineralölen in Hydrauliksystemen zum Einsatz. Mit zunehmender Betriebsdauer lagern sich Verunreinigungen im Filtermaterial ab, so daß sich dessen Strömungswiderstand erhöht. Um zu vermeiden, daß bei zugesetztem Filtermaterial keine Flüssigkeit mehr das Filterelement passieren kann und dadurch die Versorgung beispielsweise des Hydrauliksystems mit Hydrauliköl unterbrochen wird, ist an der Endscheibe ein Bypassventil vorgesehen, daß bei zugesetztem Filtermaterial eine Strömungsverbindung freigibt.

Ein Filterelement der eingangs beschriebenen Art wird in der DE 198 39 190 A1 beschrieben. Hierbei umfaßt das Bypassventil einen an der Durchgangsöffnung der Endscheibe gehaltenen Ventilkörper, der einen Ventilsitz ausbildet. In Richtung auf den Ventilsitz wird ein Ventilteller mittels einer Druckfeder belastet, wobei sich die Druckfeder an einer Federhalterung abstützt, die ihrerseits Ausströmöffnungen des Ventilkörpers hintergreift.

Aufgabe der vorliegenden Erfindung ist es, ein Filterelement der eingangs genannten Art derart weiterzubilden, daß es unter Aufrechterhaltung einer hohen Filterqualität konstruktiv einfacher und kostengünstiger montierbar ist.

Diese Aufgabe wird bei einem Filterelement der gattungsgemäßen Art erfindungsgemäß dadurch gelöst, daß das Filterelement ein die Schließfeder abstützendes Siebelement aufweist. In die Erfindung fließt der Gedanke mit ein, daß auch bei zugesetztem Filtermaterial und entsprechend geöffnetem Bypassventil die durch das Filterelement hindurch strömende Flüssigkeit zumindest grob gefiltert werden soll, um eine Beschädigung insbesondere von Elementen eines Hydrauliksystems, bei dem das Filterelement zum Einsatz kommt, zu verhindern. Zu diesem Zweck umfaßt das Filterelement ein Siebelement, das stromabwärts der Durchgangsöffnung angeordnet ist. Das Siebelement ist derart ausgebildet, daß es die Schließfeder des Bypassventils abstützt. Dies hat den Vorteil, daß eine separate Federhalterung entfallen kann. Das erfindungsgemäße Filterelement zeichnet sich folglich nicht nur durch eine hohe Filterqualität aus, sondern kann aufgrund des Wegfalls einer separaten Federhalterung kostengünstig montiert werden.

Vorzugsweise ist das Siebelement topfförmig ausgebildet und nimmt die Schließfeder auf. Das Siebelement bildet somit eine Aufnahme oder ein Gehäuse für die Schließfeder. Hierbei hat es sich als besonders günstig erwiesen, wenn das Siebelement zylinderförmig ausgebildet ist.

Bei einer besonders bevorzugten Ausgestaltung ist zur Vereinfachung der Konstruktion und der Montage des Filterelementes vorgesehen, daß das Siebelement an der Endscheibe gehalten ist. Ein separates Halteelement für das Siebelement kann dadurch entfallen.

Eine besonders einfache Montage des Filterelementes kann dadurch erzielt werden, daß das Siebelement mittels einer Rastverbindung an der Endscheibe gehalten ist. Zur Montage des Filterelementes kann somit das Siebelement mit der Endscheibe verrastet werden, wobei insbesondere eine unlösbare Rastverbindung zum Einsatz kommen kann.

In vorteilhafter Ausgestaltung der Erfindung kann vorgesehen sein, daß an der Endscheibe eine Rastzunge angeordnet ist, die einen der Endscheibe zugewandten Endbereich des Siebelements hintergreift. Hierbei hat es sich als besonders vorteilhaft erwiesen, wenn die Rastzunge einstückig mit der Endscheibe verbunden ist, da dadurch die Herstellungskosten des Filterelementes verringert werden können.

Eine besonders stabile Konstruktion des Filterelementes kann dadurch erzielt werden, daß sich die Rastzunge in radialer Richtung am Filtermantel abstützt. Hierbei ist es besonders vorteilhaft, wenn an der Endscheibe ein den Filtermantel in Umfangsrichtung umgebender Haltering angeordnet ist, so daß der Filtermantel mit seinem der Endscheibe zugewandten Endbereich zwischen den Haltering und die Rastzunge eingeführt werden kann. Der Haltering ist hierbei vorteilhafterweise einstückig mit der Endscheibe verbunden.

Eine besonders hohe mechanische Stabilität kann dem Filterelement dadurch verliehen werden, daß an der Endscheibe ein Anschlag angeordnet ist, an dem das Siebelement anliegt. Der Anschlag kann hierbei eine Stütze ausbilden, die das Siebelement sowohl in axialer als auch in radialer Richtung abstützt. Hierbei ist es von Vorteil, wenn der Anschlag einstückig mit der Endscheibe verbunden ist.

Einen besonders hohen mechanischen Belastungen standhaltende Verbindung zwischen Siebelement und Endscheibe kann dadurch erzielt werden, daß das Siebelement zwischen der Rastzunge und dem Anschlag einspannbar ist.

Bei zugesetztem Filtermaterial kann aufgrund der sich am Filterelement einstellenden Druckdifferenz der Ventilteller des Bypassventils in die dem Ventilsitz abgewandte Richtung verschoben werden. Hierbei ist es von Vorteil, wenn am Ventilkörper - vorzugsweise einstückig mit dem Ventilkörper verbunden - ein Führungselement für den Ventilteller angeordnet ist.

Als besonders günstig hat es sich erwiesen, wenn der Ventilkörper ein die Durchgangsöffnung umgebendes Ringteil umfaßt, an das in Durchströmrichtung des Bypassventils mehrere in Umfangsrichtung verteilt angeordnete Führungslaschen angeformt sind, die den Ventilteller in Umfangsrichtung umgeben.

Eine weitere Kostenersparnis bei der Herstellung des Filterelementes kann dadurch erzielt werden, daß der Ventilkörper und die Endscheibe einstückig miteinander verbunden sind.

Bei einer besonders bevorzugten Ausführungsform ist vorgesehen, daß der Ventilkörper und die Endscheibe aus Kunststoff gefertigt sind. Dies ermöglicht die Herstellung der Endscheibe mit integriertem Ventilkörper im kostengünstigen Spritzgußverfahren.

Das erfindungsgemäße Filterelement kann beispielsweise in Form eines einer Pumpe vorgelagerten Saugfilters zum Einsatz kommen, mit dessen Hilfe die der Pumpe zugeführte Flüssigkeit filtriert werden kann. Hierbei muß allerdings sichergestellt werden, daß sich am Filterelement nur ein verhältnismäßig geringer Druckabfall ausbildet. Es kann auch vorgesehen sein, das Filterelement als Rücklauffilter auszugestalten, das in einem Hydrauliksystem einem Arbeitselement, beispielsweise einem Hydraulikzylinder, nachgeordnet ist. In einem derartigen Fall kann ein höherer Druckabfall am Filterelement toleriert werden. Dies wiederum ermöglicht es, das Filterelement mit einer sehr hohen Filterfeinheit auszubilden.

Bei einer besonders bevorzugten Ausführungsform der Erfindung ist vorgesehen, daß der Filtermantel einen ersten und einen zweiten Mantelabschnitt umfaßt, die in axialer Richtung hintereinander angeordnet sind und jeweils ein Filtermaterial aufweisen, wobei das Filtermaterial des ersten Mantelabschnitts eine höhere Filterfeinheit aufweist als das Filtermaterial des zweiten Mantelabschnitts, und wobei der erste Mantelabschnitt die Endscheibe trägt und der zweite Mantelabschnitt mit dem ersten Mantelabschnitt über eine Rastverbindung verbindbar ist. Eine derartige Ausgestaltung ermöglicht den Einsatz des Filterelementes in einem kombinierten Rücklauf-Saugfilter. Hierbei ist jedem Mantelabschnitt ein separater Einlaß an einem Filtergehäuse zugeordnet, so daß den jeweiligen Mantelabschnitten separat zu filtrierende Flüssigkeit zugeführt werden kann. Über einen gemeinsamen Auslaß am Filtergehäuse kann die filtrierte Flüssigkeit abgegeben werden. Der die höhere Filterfeinheit aufweisende erste Mantelabschnitt kann somit nicht nur in einem Rücklauffilter eingesetzt werden, sondern auch in einem kombinierten Rücklauf-Saugfilter. Hierzu ist es lediglich erforderlich, zusätzlich zum ersten Mantelabschnitt den zweiten Mantelabschnitt einzusetzen, wobei dieser über die Rastverbindung mit dem ersten Mantelabschnitt verbunden werden kann.

Die Rastverbindung zwischen den beiden Mantelabschnitten kann beispielsweise dadurch ausgebildet werden, daß der erste Mantelabschnitt auf seiner der Endscheibe zugewandten Stirnseite eine Abschlußscheibe trägt und der zweite Mantelabschnitt mindestens eine Rastzunge aufweist, die die Abschlußscheibe hintergreift. Dies ermöglicht insbesondere eine Ausgestaltung, bei der der zweite Mantelabschnitt auf den ersten Mantelabschnitt aufsteckbar ist.

Um sicherzustellen, daß sich bei der Ankopplung des zweiten Mantelabschnitts an den ersten Mantelabschnitt eine flüssigkeitsdichte Verbindung ausbildet, ist es von Vorteil, wenn der zweite Mantelabschnitt im wesentlichen linienförmig am ersten Mantelabschnitt anliegt. Der linienförmige Anlagebereich kann dadurch die Funktion einer Dichtkante übernehmen, ohne daß ein separates Dichtungselement, beispielsweise ein O-Ring, für die Verbindung zwischen dem zweiten Mantelabschnitt und dem ersten Mantelabschnitt zum Einsatz kommen muß.

Eine vereinfachte Montage des Filterelements unter Aufrechterhaltung einer flüssigkeitsdichten Verbindung zwischen den beiden Mantelabschnitten kann dadurch erzielt werden, daß am ersten Mantelabschnitt ein Verbindungsstück und am zweiten Mantelabschnitt ein korrespondierendes Anschlußstück angeordnet ist, wobei das Verbindungs- und das Anschlußstück ineinander einführbar und das Verbindungs- oder Anschlußstück zur Ausbildung einer linienförmigen Anlage radial verformbar ist. Das Verbindungs- und das Anschlußstück können beispielsweise axial ineinander einführbar ausgestaltet sein, wobei sich beim Ineinandereinführen zumindest eines der beiden Teile in radialer Richtung verformt.

Das Verbindungsstück kann beispielsweise in Form eines sich in axialer Richtung konisch verjüngenden Ansatzkragens ausgebildet sein, der an einer Auslaßöffnung der Abschlußscheibe des ersten Mantelabschnitts angeordnet ist. Der Ansatzkragen ist hierbei vorzugsweise ebenso wie die Abschlußscheibe aus Kunststoff gefertigt und einstückig mit der Abschlußscheibe verbunden.

Bevorzugt bildet der Ansatzkragen einen Stützring aus, an dem der der Endscheibe abgewandte Endbereich des ersten Mantelabschnitts anliegt und der sich in Richtung auf die Endscheibe konisch verjüngt. Hierbei hat sich ein Konuswinkel von weniger als 5°, vorzugsweise 2° bis 3°, als besonders vorteilhaft erwiesen, um eine linienförmige Anlagefläche für das am zweiten Mantelabschnitt angeordnete Anschlußstück auszubilden. Unter "Konuswinkel" wird hierbei der Neigungswinkel des sich verjüngenden Stützringes bezogen auf die Zylinderachse des Filtermantels verstanden.

Das Anschlußstück ist vorzugsweise als dem ersten Mantelabschnitt zugewandter Endbereich eines eine Vielzahl von Durchbrüchen aufweisenden Stützrohres des zweiten Mantelabschnitts ausgebildet. Das Anschlußstück ist somit einstückig mit dem Stützrohr des zweiten Mantelabschnitts verbunden und kann in axialer Richtung in den ersten Mantelabschnitt eingeführt werden.

Bei einer bevorzugten Ausführungsform ist vorgesehen, daß der zweite Mantelabschnitt eine an der Abschlußscheibe des ersten Mantelabschnitts anliegende Stirnwand umfaßt, die am Stützrohr gehalten ist, und daß der das Anschlußstück ausbildende Endbereich des Stützrohrs über die Stirnwand axial übersteht. Die Stirnwand bildet somit beim Einführen des Anschlußstücks in den ersten Mantelabschnitt einen Anschlag, so daß sich beim Zusammenführen der beiden Mantelabschnitte eine eindeutige Endstellung des zweiten Mantelabschnitts ergibt, wobei gleichzeitig über den Anschlag der erste Mantelabschnitt in axialer Richtung gesichert ist.

Die Stirnwand ist vorzugsweise einstückig mit dem Stützrohr des zweiten Mantelabschnitts verbunden, da sich dadurch die Herstellungskosten des erfindungsgemäßen Filterelementes weiter reduzieren lassen.

Die Erfindung betrifft außerdem eine Filtervorrichtung zum Filtrieren einer Flüssigkeit, insbesondere eines Hydrauliköls, mit einem mittels eines Deckel verschließbaren Filtergehäuse und mit einem Filterelement der voranstehend erläuterten Art, wobei das Filterelement über eine Rastverbindung mit dem Deckel lösbar verbindbar ist. Die Filtervorrichtung kann dadurch besonders kostengünstig montiert werden, und auch die Wartung der Filtervorrichtung gestaltet sich besonders einfach, da beim Öffnen des Filtergehäuses zusammen mit dem Deckel auch das über die Rastverbindung mit dem Deckel verbundene Filterelement dem Filtergehäuse entnommen werden kann.

Hierbei ist es von Vorteil, wenn an der Endscheibe des Filterelements mindestens ein im wesentlichen axial ausgerichtetes, radial elastisch verformbares Rastelement angeformt ist, dem eine am Deckel ausgebildete Rastaufnahme zugeordnet ist.

So kann beispielsweise vorgesehen sein, daß am Deckel eine zylinderförmige Hülse angeordnet ist, die das mindestens eine Rastelement aufnimmt und an ihrem freien Ende einen radial nach innen gerichteten Randabschnitt umfaßt. Das mindestens eine Rastelement ist somit in Umfangsrichtung von der Hülse umgeben, so daß sich eine besonders hohen mechanischen Belastungen standhaltende Verbindung ergibt.

Von besonderem Vorteil ist es, wenn sowohl das Filtergehäuse als auch der Deckel aus Kunststoff gefertigt sind.

Die nachfolgende Beschreibung einer bevorzugten Ausführungsform der Erfindung dient im Zusammenhang mit der Zeichnung der näheren Erläuterung. Es zeigen:

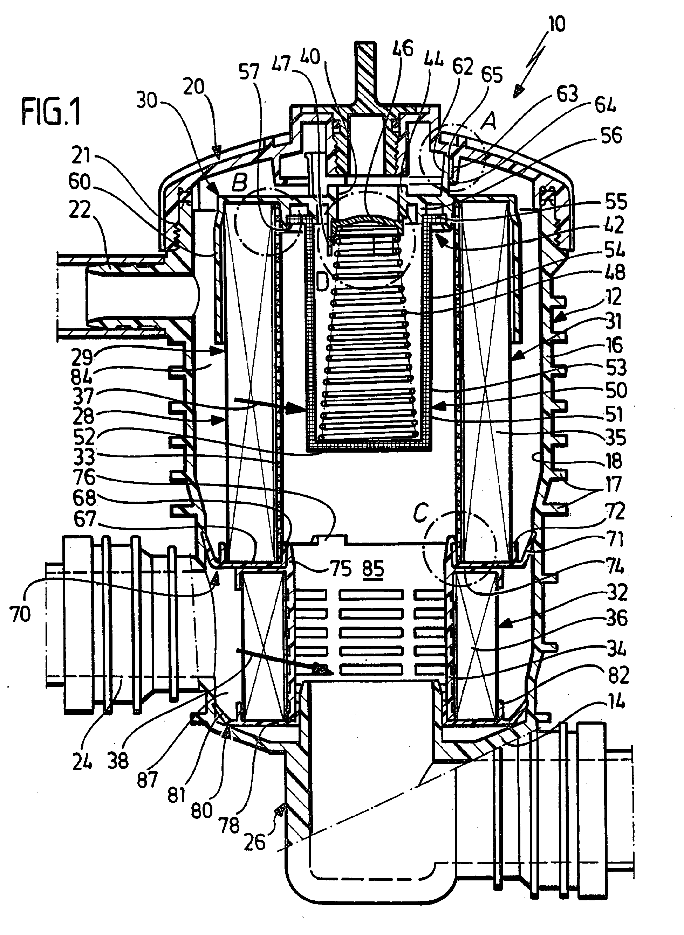

- Figur 1:: einen schematischen Längsschnitt einer Filtervorrichtung mit einem Filterelement;
- Figur 2:: eine vergrößerte Darstellung des in Figur 1 mit A gekennzeichneten Bereichs;
- Figur 3:: eine vergrößerte Darstellung des in Figur 1 mit B gekennzeichneten Bereichs;
- Figur 4:: eine vergrößerte Darstellung des Figur 1 mit C gekennzeichneten Bereichs und
- Figur 5:: eine vergrößerte Darstellung des in Figur 1 mit D gekennzeichneten Bereichs.

In der Zeichnung ist eine insgesamt mit dem Bezugszeichen 10 belegte Filtervorrichtung in Form eines kombinierten Rücklauf-Saugfilters dargestellt. Die Filtervorrichtung 10 umfaßt ein im wesentlichen zylinderförmiges Filtergehäuse 12 mit einem Gehäuseboden 14 und einem Gehäusemantel 16, der auf seiner Außenseite eine Vielzahl von Verstärkungsrippen 17 trägt, während seine Innenseite 18 im wesentlichen glatt ausgebildet ist. Auf die dem Gehäuseboden 14 abgewandte Stirnkante des Filtergehäuses 12 ist unter Zwischenschaltung eines Dichtringes ein Deckel 20 aufsetzbar, der über eine Schraubverbindung 21 mit dem Filtergehäuse 12 lösbar verbindbar ist. An den Gehäusemantel 16 sind dem Deckel 20 benachbart ein radial abstehender erster Einlaßstutzen 22 und dem Gehäuseboden 14 benachbart ein radial abstehender zweiter Einlaßstutzen 24 angeformt, während an dem Gehäuseboden 14 ein einziger Auslaßstutzen 26 angeformt ist.

Das Filtergehäuse 12 nimmt ein Filterelement 28 auf. Dieses umfaßt einen hohlzylindrischen Filtermantel 29, an dessen dem Deckel 20 benachbarter Stirnseite eine Endscheibe 30 angeordnet ist.

Der Filtermantel 29 ist zweiteilig ausgestaltet und umfaßt einen dem Deckel 20 benachbarten ersten Mantelabschnitt 31 und einen dem Gehäuseboden 14 benachbarten zweiten Mantelabschnitt 32. Beide Mantelabschnitte 31 und 32 weisen jeweils ein Stützrohr 33 bzw. 34 auf. Die beiden Stützrohre 33, 34 sind koaxial zueinander ausgerichtet und jeweils von einem hohlzylinderförmig ausgebildeten Filtermaterial 35 bzw. 36 umgeben. Das Stützrohr 33 des ersten Mantelabschnitts 31 ist hierbei aus Metall gefertigt, während für die Herstellung des Stützrohres 34 des zweiten Mantelabschnitts 32 ein Kunststoffmaterial zum Einsatz kommt. Das Filtermaterial 35 des ersten Mantelabschnitts weist eine höhere Filterfeinheit auf als das Filtermaterial 36 des zweiten Mantelabschnitts 32. So kann für das Filtermaterial 35 ein Faservlies zum Einsatz kommen mit einer derartigen Feinheit, daß selbst Schmutzpartikel mit einer Größe von ca. 5 um noch mit einem Wirkungsgrad von mindestens 50 % ausgefiltert werden können. Im Gegensatz hierzu ist das Filtermaterial 36 des zweiten Mantelabschnitts 32 gröber ausgestaltet, es kann beispielsweise als Siebelement ausgebildet sein mit einer Filterfeinheit von mindestens etwa 60 µm.

In üblicher Weise umfassen die beiden Stützrohre 33 und 34 jeweils eine Vielzahl von Durchflußbohrungen, so daß sowohl der erste Mantelabschnitt 31 als auch der zweite Mantelabschnitt 32 in radialer Richtung von außen nach innen entsprechend der Pfeile 37 bzw. 38 von der zu filtrierenden Flüssigkeit durchströmt werden kann.

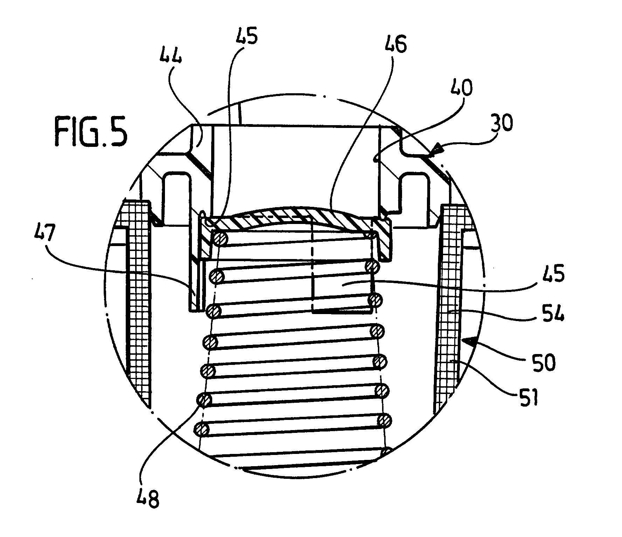

Die Endscheibe 30 ist aus Kunststoff gefertigt und umfaßt eine zentrale Durchlaßöffnung 40, an der ein Bypassventil 42 gehalten ist. Dieses weist einen die Durchlaßöffnung 40 umgebenden Ventilteller 44 auf, der einstückig mit der Endscheibe 30 verbunden und ringförmig ausgebildet ist und auf seiner dem Deckel 20 abgewandten Stirnseite einen ringförmigen Ventilsitz 45 ausbildet, an dem im geschlossenen Zustand des Bypassventils 42 ein Ventilteller 46 anliegt. Dies wird insbesondere aus Figur 5 deutlich.

In axialer Richtung dem Deckel 20 abgewandt sind an den Ventilkörper 44 im Bereich des Ventilsitzes 45 in Umfangsrichtung gleichmäßig verteilt insgesamt drei Führungslaschen 47 angeformt, die eine Führung für den Ventilteller 46 in axialer Richtung ausbilden.

Der Ventilteller 46 wird von einer Schließfeder 48 in Richtung auf den Ventilsitz 45 federbelastet. Die Schließfeder 48 stützt sich in axialer Richtung an einem der Durchlaßöffnung 40 nachgeordneten Siebelement 50 ab, das über eine nachfolgend beschriebene Rastverbindung an der Endscheibe 30 gehalten ist. Das Siebelement 50 umfaßt ein topfförmiges Siebgehäuse 51 mit einem Siebgehäuseboden 52 und einem Siebgehäusemantel 53. Am Siebgehäuse 51 ist ein die Schließfeder 41 vollständig umgebendes Sieb 54 festgelegt. Die Schließfeder 48 ist zwischen dem Siebgehäuseboden 52 und dem Ventilteller 46 eingespannt, so daß von ihr auf den Ventilteller 46 eine Schließkraft in Richtung auf den Ventilsitz 45 ausgeübt wird.

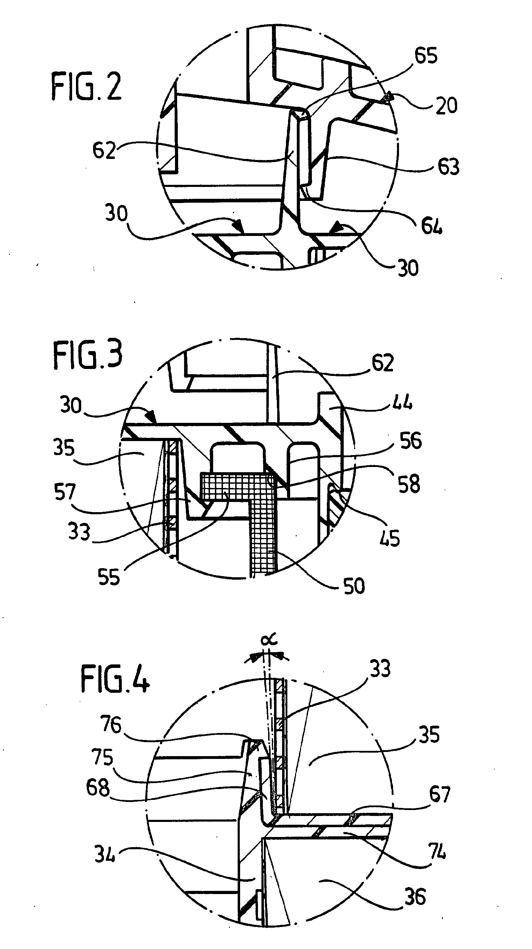

Wie insbesondere aus Figur 3 deutlich wird, ist der dem Deckel 20 zugewandte Endbereich des Siebgehäusemantels 43 als radial abstehender Flansch 55 ausgebildet, der radial innenseitig an einer einstückig mit der Endscheibe 30 verbundenen und koaxial zum Siebgehäusemantel 53 ausgerichteten Stützhülse 56 anliegt, und der radial außenseitig von mehreren in Umfangsrichtung des Flansches 55 gleichmäßig versetzt zueinander angeordneten Rastzungen 57 hintergriffen wird. Die Stützhülse 56 bildet sowohl in radialer Richtung als auch in axialer Richtung einen Anschlag für das Siebelement 50. Zu diesem Zweck bildet die Stützhülse 56 eine radial einwärts gerichtete Stufe 58, an der der Flansch 55 des Siebelementes 50 anliegt.

Die Rastzungen 57 sind in radialer Richtung elastisch verformbar und üben auf den Flansch 55 eine radial einwärts in Richtung auf die Stützhülse 56 gerichtete Vorspannung aus. Zur Montage kann das Siebelement 50 auf einfache Weise mit der Endscheibe 30 verrastet werden.

An den Außenrand der Endscheibe 30 ist koaxial zum Filtermantel 29 ausgerichtet eine zylindrische Außenhülse 60 angeformt, die den der Endscheibe 30 zugewandten Endbereich des Filtermantels 29 in Umfangsrichtung umgibt. Der Filtermantel 29 kann in den Bereich zwischen der Außenhülse 60 und den Rastzungen 57 eingesetzt werden kann. Die Rastzungen 57 sind somit in radialer Richtung auf ihrer dem Siebelement 50 abgewandten Außenseite vom Filtermantel 29 abgestützt.

Auf ihrer dem Deckel 20 zugewandten Oberseite trägt die Endscheibe 30 drei gleichmäßig über einen Kreisumfang versetzt zueinander angeordnete Rastzungen 62, die einstückig mit der Endscheibe 30 verbunden und von einer an den Deckel 30 innenseitig angeformten Rasthülse 63 umgeben sind. Die Rasthülse 63 trägt an ihrem freien Ende eine radial einwärts gerichtete Rastnase 64, die von radial nach außen gerichteten Rasthaken 65 hintergriffen wird, die am freien Ende der Rastzungen 62 angeformt sind. Mittels der Rasthülse 63 und der Rastzungen 62 wird eine Rastverbindung zwischen der Endscheibe 30 und dem Deckel 20 ausgebildet.

Auf seiner dem Deckel 20 abgewandten Stirnseite trägt der erste Mantelabschnitt 31 des Filtermantels 29 eine kreisringförmige Abschlußscheibe 67, die an ihrem Innenrand einen dem Deckel 20 zugewandten Ansatzkragen in Form eines Stützrings 68 trägt. Der Stützring 68 ist konisch ausgestaltet und verjüngt sich in Richtung auf den Deckel 20 mit einem Konuswinkel α von etwa 3°, wie insbesondere aus Figur 4 deutlich wird. Unter Konuswinkel wird hierbei der Neigungswinkel des Stützringes 68 relativ zur Zylinderachse des Filterelements 28 verstanden.

An den Außenrand der Abschlußscheibe 67 ist ein erstes Dichtungselement 70 angeformt, das im wesentlichen V-förmig ausgestaltet ist mit einem ersten Schenkel, der eine Dichtlippe 71 ausbildet und schräg zur Zylinderachse des Filterelementes 28 ausgerichtet ist, so daß ein freier Endbereich der Dichtlippe 71 dem Deckel 20 zugewandt an der Innenseite 18 des Gehäusemantels 16 anliegt, und mit einem zweiten Schenkel, der einen koaxial zum Stützrohr 33 ausgerichteten Außenring 72 ausbildet und den dem Deckel 20 abgewandten Endbereich des ersten Mantelabschnitts 31 in Umfangsrichtung umgibt.

An der der Endscheibe 30 abgewandten Unterseite der Abschlußscheibe 67 liegt eine kreisringförmige Stirnwand 74 des zweiten Mantelabschnittes 32 an, die einstückig mit dem Stützrohr 34 des zweiten Mantelabschnittes 32 verbunden ist und einen stirnseitigen Abschluß für das Filtermaterial 36 des zweiten Mantelabschnittes 32 ausbildet. Das Stützrohr 34 des zweiten Mantelabschnitts 32 steht in Richtung des Deckels 20 über die Stirnwand 74 hervor und bildet in diesem Bereich einen Kragen 75, der in das Stützrohr 68 in axialer Richtung einführbar ist und an seinem freien Ende in Umfangsrichtung gleichmäßig verteilt insgesamt drei Rasthaken 76 trägt, die einstückig mit dem Kragen 75 verbunden sind und den Stützring 68 hintergreifen.

Der konisch ausgebildete Stützring 68 wird in seinem dem Deckel 20 zugewandten Endbereich beim Einführen des Kragens 75 radial nach außen verbogen, wobei sich ein in der Zeichnung nicht dargestellter, im wesentlichen linienförmiger Anlagebereich des Kragens 75 am Stützring 68 ergibt. Der Stützring 68 ist elastisch verformbar ausgestaltet, so daß nach dem Einführen und Verrasten des Kragens 75 vom Stützring 68 im linienförmigen Anlagebereich eine radial gerichtete Druckbelastung auf dem Kragen 75 ausgeübt wird. Dies hat eine flüssigkeitsdichte Verbindung des Stützrings 68 mit dem Kragen 75 zur Folge.

An seiner dem Deckel 28 abgewandten Stirnseite trägt der zweite Mantelabschnitt 32 eine entsprechend der Abschlußscheibe 67 ausgestaltete Endkappe 78, an deren Außenrand ein zweites Dichtungselement 80 angeformt ist, das entsprechend dem ersten Dichtungselement 70 im wesentlichen V-förmig ausgestaltet ist mit einem ersten Schenkel, der eine Dichtlippe 81 ausbildet und schräg zur Zylinderachse des Filtermantels 29 ausgerichtet ist, so daß ein freier Endbereich der Dichtlippe 81 dem Deckel 20 zugewandt an der Innenseite 18 des Gehäusemantels 16 anliegt, und mit einem zweiten Schenkel, der einen koaxial zum Stützrohr 34 ausgerichteten Haltering 82 ausbildet und das Filtermaterial 36 des zweiten Mantelabschnitts 32 in seinem dem Deckel 20 abgewandten Endbereich in Umfangsrichtung umgibt.

Über den ersten Einlaßstutzen 22 kann zu filtrierendes Hydrauliköl einem den ersten Mantelabschnitt 31 in Umfangsrichtung umgebenden Ringraum 84 zugeführt werden. Von diesem durchströmt das Hydrauliköl den ersten Mantelabschnitt 31 in radialer Richtung von außen nach innen, wie dies bereits durch den Pfeil 37 verdeutlicht wurde, und gelangt anschließend in den vom Filtermantel 29 umgebenen Innenraum 85, von dem aus das filtrierte Hydrauliköl über den Auslaßstutzen 26 abgegeben werden kann.

Da sich das Filtermaterial 35 des ersten Mantelabschnitt 31 im Laufe des Betriebes zusetzt, ergibt sich ein zunehmender Druckabfall am ersten Mantelabschnitt 31. Dieser hat zur Folge, daß bei Erreichen eines vorbestimmten Druckwertes das Bypassfilter 42 öffnet und dadurch eine unmittelbare Strömungsverbindung vom Ringraum 84 zum Innenraum 85 freigegeben wird. Hierbei wird allerdings durch den Einsatz des Siebelementes 50 sichergestellt, daß auch bei geöffnetem Bypassventil 42 das Hydrauliköl zumindest grob gefiltert wird.

Der Ringraum 84 wird in axialer Richtung vom ersten Dichtungselement 70 abgedichtet. Hierbei übt das im Ringraum 84 vorliegende ungefilterte Hydrauliköl auf die in Richtung des Deckels 20 geneigte Dichtlippe 71 eine derartige Druckbelastung aus, daß die Dichtlippe 71 radial nach außen gegen die Innenseite 18 des Gehäusemantels 16 gedrückt wird. Dies hat eine zuverlässige Abdichtung des Ringraums 84 zur Folge, ohne daß zusätzliche Dichtringe zum Einsatz kommen müssen.

Über den zweiten Einlaßstutzen 24 kann zu filtrierendes Hydrauliköl einem den zweiten Mantelabschnitt 31 in Umfangsrichtung umgebenden Ringraum 87 zugeführt werden, von dem aus das zu filtrierende Hydrauliköl den zweiten Mantelabschnitt 32 in radialer Richtung von außen nach innen entsprechend dem Pfeil 38 durchströmt und somit ebenfalls in den Innenraum 85 gelangt, von dem aus das gefilterte Öl über den Auslaß 26 abgegeben werden kann. Da das Filtermaterial 36 des zweiten Mantelabschnittes 32 eine geringere Filterfeinheit aufweist als das Filtermaterial 35 des ersten Mantelabschnitts 31, kann der erste Mantelabschnitt 31 als Rücklauffilter betrieben werden, während der zweite Mantelabschnitt 32 als Saugfilter zum Einsatz kommen kann. Das Filterelement 28 bildet somit ein Kombinationsfilterelement, das auf einfache Weise montierbar ist. Hierzu ist es lediglich erforderlich, nach der Positionierung des Ventiltellers 46 und der Schließfeder 48 das Siebelement 50 über die entsprechende Rastverbindung mit der Endscheibe 30 zu verbinden, und anschließend kann der erste Mantelabschnitt 31 mit der Endscheibe 30 verklebt werden, und in einem weiteren Montageschritt läßt sich dann der zweite Mantelabschnitt 32 auf den ersten Mantelabschnitt 31 aufsetzen und mit diesem verrasten. Anschließend wird das so gebildete Filterelement 28 über die zugeordnete Rastverbindung mittels der Rastzungen 32 und der Rasthülse 63 mit dem Deckel 20 lösbar verbunden, und in einem letzten Montageschritt kann dann das Filterelement 28 in das Filtergehäuse 12 eingesetzt und der Deckel 20 mit dem Filtergehäuse 12 verschraubt werden. Das zum Einsatz kommende Filterelement und das Filtergehäuse zeichnen sich somit durch eine kostengünstige Montage aus. Da außerdem mit Ausnahme des zum Einsatz kommenden Filtermaterials und des hohen mechanischen Belastungen ausgesetzten Stützrohres 33 praktisch alle Teile aus Kunststoff gefertigt sind, läßt sich die Filtervorrichtung 10 kostengünstig herstellen.

## Patentansprüche

1. Filterelement für eine Filtervorrichtung (10) zum Filtrieren einer Flüssigkeit, insbesondere eines Hydrauliköls, mit einem ein Filtermaterial (35) aufweisenden, hohlzylinderförmigen Filtermantel (29), einer den Filtermantel (29) stirnseitig abschließenden Endscheibe (30) und einem bei zugesetztem Filtermaterial (35) eine Durchgangsöffnung (40) der Endscheibe (30) freigebenden Bypassventil (42), das einen einen Ventilsitz (45) ausbildenden Ventilkörper (44) und einen mittels einer Schließfeder (48) in Richtung auf den Ventilsitz (45) federbelasteten Ventilteller (46) umfaßt, **dadurch gekennzeichnet, daß** das Filterelement (28) ein die Schließfeder (48) abstützendes Siebelement (50) aufweist.

2. Filterelement nach Anspruch 1, **dadurch gekennzeichnet, daß** das Siebelement (50) topfförmig ausgebildet ist und die Schließfeder (48) aufnimmt.

3. Filterelement nach Anspruch 1 oder 2, **dadurch gekennzeichnet, daß** das Siebelement (50) an der Endscheibe (30) gehalten ist.

4. Filterelement nach Anspruch 1, 2 oder 3, **dadurch gekennzeichnet, daß** das Siebelement (50) mittels einer Rastverbindung an der Endscheibe (30) gehalten ist.

5. Filterelement nach einem der voranstehenden Ansprüche, **dadurch gekennzeichnet, daß** an der Endscheibe (30) eine Rastzunge (57) angeordnet ist, die einen der Endscheibe (30) zugewandten Endbereich des Siebelementes (50) hintergreift.

6. Filterelement nach Anspruch 5, **dadurch gekennzeichnet, daß** sich die Rastzunge (57) in radialer Richtung am Filtermantel (29) abstützt.

7. Filterelement nach einem der voranstehenden Ansprüche, **dadurch gekennzeichnet, daß** an der Endscheibe (30) ein Anschlag (56) angeordnet ist, an dem das Siebelement (50) anliegt.

8. Filterelement nach Anspruch, **dadurch gekennzeichnet, daß** das Siebelement (50) zwischen der Rastzunge (57) und dem Anschlag (56) einspannbar ist.

9. Filterelement nach einem der voranstehenden Ansprüche, **dadurch gekennzeichnet, daß** am Ventilkörper (44) ein Führungselement (47) für den Ventilteller (46) angeordnet ist.

10. Filterelement nach Anspruch 9, **dadurch gekennzeichnet, daß** das Führungselement (47) einstückig mit dem Ventilkörper (44) verbunden ist.

11. Filterelement nach einem der voranstehenden Ansprüche, **dadurch gekennzeichnet, daß** der Ventilkörper (44) und die Endscheibe (30) einstückig miteinander verbunden sind.

12. Filterelement nach einem der voranstehenden Ansprüche, **dadurch gekennzeichnet, daß** der Ventilkörper (44) und die Endscheibe (30) aus Kunststoff gefertigt sind.

13. Filterelement nach einem der voranstehenden Ansprüche, **dadurch gekennzeichnet, daß** der Filtermantel (29) einen ersten Mantelabschnitt (31) und einen zweiten Mantelabschnitt (32) umfaßt, die in axialer Richtung hintereinander angeordnet sind und jeweils ein Filtermaterial (35, 36) aufweisen, wobei das Filtermaterial (35) des ersten Mantelabschnitts (31) eine höhere Filterfeinheit aufweist als das Filtermaterial (36) des zweiten Mantelabschnitts (32), und wobei der erste Mantelabschnitt (31) die Endscheibe (30) trägt und der zweite Mantelabschnitt (32) mit dem ersten Mantelabschnitt (31) über eine Rastverbindung verbindbar ist.

14. Filtervorrichtung nach Anspruch 13, **dadurch gekennzeichnet, daß** der erste Mantelabschnitt (31) auf seiner der Endscheibe (30) abgewandten Stirnseite eine Abschlußscheibe (67) trägt und daß der zweite Mantelabschnitt (32) mindestens eine Rastzunge (76) aufweist, die die Abschlußscheibe (67) hintergreift.

15. Filterelement nach Anspruch 13 oder 14, **dadurch gekennzeichnet, daß** der zweite Mantelabschnitt (32) im wesentlichen linienförmig am ersten Mantelabschnitt (31) anliegt.

16. Filterelement nach Anspruch 15, **dadurch gekennzeichnet, daß** am ersten Mantelabschnitt (31) ein Verbindungsstück (68) und am zweiten Mantelabschnitt (31) ein korrespondierendes Anschlußstück (75) angeordnet ist, wobei das Verbindungs- und das Anschlußstück (68, 75) ineinander einführbar und das Verbindungs- oder Anschlußstück (68, 75) zur Ausbildung einer linienförmigen Anlage radial verformbar sind.

17. Filterelement nach Anspruch 16, **dadurch gekennzeichnet, daß** das Verbindungsstück in Form eines sich in axialer Richtung konisch verjüngenden Ansatzkragens (75) ausgebildet ist, der an einer Auslaßöffnung der Abschlußscheibe (67) des ersten Mantelabschnitts (31) angeordnet ist.

18. Filterelement nach Anspruch 17, **dadurch gekennzeichnet, daß** der Ansatzkragen einen Stützring (68) ausbildet, an dem der erste Mantelabschnitt (31) anliegt und der sich in Richtung auf die Endscheibe (30) konisch verjüngt.

19. Filterelement nach Anspruch 16, 17 oder 18, **dadurch gekennzeichnet, daß** der zweite Mantelabschnitt (32) ein eine Vielzahl von Durchbrüchen aufweisendes Stützrohr (34) umfaßt, dessen dem ersten Mantelabschnitt (31) zugewandter Endbereich das Anschlußstück (75) ausbildet.

20. Filterelement nach Anspruch 19, **dadurch gekennzeichnet, daß** der zweite Mantelabschnitt (32) eine an der Abschlußscheibe (67) des ersten Mantelabschnitts (31) anliegende Stirnwand (74) umfaßt, die am Stützrohr (34) gehalten ist, und daß der das Anschlußstück (75) ausbildende Endbereich des Stützrohres (34) über die Stirnwand (74) axial übersteht.

21. Filtervorrichtung zum Filtrieren einer Flüssigkeit, insbesondere eines Hydrauliköls, mit einem mittels eines Deckels (20) verschließbaren Filtergehäuse (12) und mit einem Filterelement (28) nach einem der voranstehenden Ansprüche, wobei das Filterelement (28) über eine Rastverbindung mit dem Deckel (20) lösbar verbindbar ist.
